# EUROPÄISCHE PATENTANMELDUNG

(11) **EP 1 475 400 A1**
(43) Veröffentlichungstag der Anmeldung: **10.11.2004**
(21) Anmeldenummer: 04100929.1
(22) Anmeldetag: 08.03.2004
(51) Int. Cl.: C08G 18/79, C09D 175/08, C08G 18/22

(54) **Bei niedriger Temperatur härtbare feste uretdiongruppenhaltige Polyurethan-Pulverlackzusammensetzungen**

(30) Priorität: 03.05.2003 DE 10320267
(71) Anmelder: Degussa AG, 40474 Düsseldorf (DE)
(72) Erfinder: Spyrou, Emmanouil, Dr., 46282, Dorsten (DE); Loesch, Holger, 44627, Herne (DE); Wenning, Andreas, Dr., 48301, Nottuln (DE); Weiss, Jörn Volker, Dr., 45721, Haltern am See (DE); Grenda, Werner, 44627, Herne (DE)

(57) **Zusammenfassung**

Bei niedriger Temperatur härtbare feste uretdiongruppenhaltige Polyurethan-Pulverlackzusammensetzungen

## Beschreibung

Die Erfindung betrifft feste uretdiongruppenhaltige Polyurethan-Pulverlackzusammensetzungen, die bei niedrigen Einbrenntemperaturen aushärten, Verfahren zur Herstellung derartiger Zusammensetzungen sowie deren Verwendung zur Herstellung von Kunststoffen, insbesondere Pulverlackbeschichtungen, die zu hochglänzenden oder matten, licht- und wetterstabilen Lackfilmen vernetzen.

Bei Raumtemperatur feste, extern oder intern blockierte Polyisocyanate stellen wertvolle Vernetzer für thermisch vernetzbare Polyurethan (PUR)-Pulverlackzusammensetzungen dar.

So beschreibt z. B. die DE-OS 27 35 497 PUR-Pulverlacke mit hervorragender Witterungs- und Wärmestabilität. Die Vernetzer, deren Herstellung in der DE-OS 27 12 931 beschrieben wird, bestehen aus ε-Caprolactam blockiertem Isocyanuratgruppen enthaltendem Isophorondiisocyanat. Es sind auch urethan-, biuret- oder harnstoffgruppenhaltige Polyisocyanate bekannt, deren Isocyanatgruppen ebenfalls blockiert sind.

Der Nachteil dieser extern blockierten Systeme besteht in der Abspaltung des Blockierungsmittels während der thermischen Vernetzungsreaktion. Da das Blockierungsmittel somit in die Umwelt emittieren kann, müssen aus ökologischen und arbeitshygienischen Gründen besondere Vorkehrungen zur Reinigung der Abluft und/oder Wiedergewinnung des Blockierungsmittels getroffen werden. Zudem weisen die Vernetzer eine geringe Reaktivität auf. Es sind Härtungstemperaturen oberhalb von 170°C erforderlich.

Die DE-OS 30 30 539 und DE-OS 30 30 572 beschreiben Verfahren zur Herstellung von uretdiongruppenhaltigen Polyadditionsverbindungen, deren terminale Isocyanatgruppen mit Monoalkoholen oder Monoaminen irreversibel blockiert sind. Nachteilig sind insbesondere die Ketten abbrechenden Bestandteile der Vernetzer, die zu geringen Netzwerkdichten der PUR-Pulverlackbeschichtungen und damit zu mäßigen Lösemittelbeständigkeiten führen.

Hydroxylgruppenterminierte, uretdiongruppenhaltige Polyadditionsverbindungen sind Gegenstand der EP 669 353. Sie weisen aufgrund ihrer Funktionalität von zwei eine verbesserte Resistenz gegenüber Lösemitteln auf. Den Pulverlackzusammensetzungen auf Basis dieser uretdiongruppenhaltigen Polyisocyanate ist gemeinsam, dass sie bei der Härtungsreaktion keine flüchtigen Verbindungen emittieren. Allerdings liegen die Einbrenntemperaturen mit mindestens 180 °C auf hohem Niveau.

Der Einsatz von Amidinen als Katalysatoren in PUR-Pulverlackzusammensetzung wird in der EP 803 524 beschrieben. Diese Katalysatoren führen zwar zu einer Erniedrigung der Aushärtungstemperatur, zeigen aber eine beträchtliche Vergilbung, die im Beschichtungsbereich allgemein unerwünscht ist. Ursache dieser Vergilbung sind vermutlich die reaktiven Stickstoffatome in den Amidinen. Diese können sich mit Luftsauerstoff zu N-Oxiden umsetzen, die für die Verfärbung verantwortlich sind.

In der EP 803 524 werden auch andere Katalysatoren erwähnt, die bislang für diesen Zweck verwendet wurden, ohne aber eine besondere Wirkung auf die Aushärtetemperatur zu zeigen. Dazu gehören die aus der Polyurethan-Chemie bekannten metallorganischen Katalysatoren, wie z. B. Dibutylzinndilaurat (DBTL), oder aber tertiäre Amine, wie z. B. 1,4-Diazabicylco[2.2.2]octan (DABCO).

In der WO 00/34355 werden Katalysatoren auf der Basis von Metall-acetylacetonaten, z. B. Zinkacetylacetonat, beansprucht. Solche Katalysatoren sind tatsächlich in der Lage, die Aushärtungstemperatur von uretdiongruppenhaltige Polyurethan-Pulverlackzusammensetzungen zu erniedrigen, zeigen als Reaktionsprodukte aber hauptsächlich Allophanate (M. Gedan-Smolka, F. Lehmann, D. Lehmann "New catalysts for the low temperature curing of uretdione powder coatings" *International Waterborne, High solids and Powder Coatings Symposium, New Orleans*, 21 - 23. 2. 2001). Allophanate sind die Umsetzungsprodukte aus einem Mol Alkohol und zwei Mol Isocyanat, während sich in der herkömmlichen Urethanchemie ein Mol Alkohol mit einem Mol Isocyanat umsetzt. Durch die unerwünschte Allophanatbildung werden also technisch wie ökonomisch wertvolle Isocyanatgruppen vernichtet.

Aufgabe der vorliegenden Erfmdung war es daher, hochreaktive uretdiongruppenhaltige Polyurethan-Pulverlackzusammensetzungen zu fmden, die sich bereits bei sehr niedrigen Temperaturen aushärten lassen und sich insbesondere zur Herstellung von Kunststoffen sowie von hochglänzenden oder matten, licht- und wetterstabilen Pulverlackbeschichtungen eignen.

Überraschend wurde gefunden, dass Metallhydroxide und -alkoholate die Rückspaltung von Uretdiongruppen so stark beschleunigen, so dass sich bei Verwendung uretdionhaltiger Pulverlackhärter die Aushärtetemperatur von Pulverlackzusammensetzungen beträchtlich erniedrigen lässt.

Gegenstand der vorliegenden Erfmdung ist eine hochreaktive Polyurethan-Pulverlackzusammensetzung, im Wesentlichen enthaltend
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6 - 18 Gew.-%,
B) mindestens ein hydroxylgruppenhaltiges Polymer mit einem Schmelzpunkt von 40 bis 130 °C und einer OH-Zahl zwischen 20 und 200 mg KOH / Gramm,
C) mindestens einen Katalysator der Formel M (OR¹)ₙ (OR²)ₘ (OR³)ₒ (OR⁴)ₚ (OR⁵)_{q} (OR⁶)ᵣ, wobei M ein Metall in beliebiger positiver Oxidationsstufe und identisch mit der Summe n+m+o+p+q+r ist, m, o, p, q, r ganze Zahlen von 0-6 darstellen und für die Summe n+m+o+p+q+r = 1 - 6 gilt, die Reste R¹ - R⁶ gleichzeitig oder unabhängig voneinander Wasserstoff oder Alkyl-, Aryl-, Aralkyl-, Heteroaryl-, Alkoxyalkylreste, mit 1-8 Kohlenstoffatomen bedeuten und die Reste jeweils linear oder verzweigt, unverbrückt oder mit anderen Resten verbrückt, unter Ausbildung von Cyclen, Bicyclen oder Tricyclen und die Verbrückungsatome neben Kohlenstoff auch Heteroatome sein können und zusätzlich noch eine oder mehrere Alkohol-, Amino-, Ester-, Keto-, Thio-, Urethan-, Harnstoff , Allophanatgruppen, Doppelbindungen, Dreifachbindungen oder Halogenatome aufweisen können,
D) gegebenenfalls eine reaktive Verbindung, die sich bei erhöhten Temperaturen mit den gegebenenfalls vorhandenen Säuregruppen der Komponente B) umsetzen kann,
E) gegebenenfalls aus der Pulverlackchemie bekannte Hilfs- und Zusatzstoffe, so dass die beiden Komponenten A) und B) in dem Verhältnis vorliegen, dass auf jede Hydroxylgruppe der Komponente B) 0,3 bis 1 Uretdiongruppe der Komponente A) entfällt, der Anteil des Katalysators unter C) 0,001 - 3 Gew.-% an der Gesamtmenge der Komponenten A) und B) beträgt und D) gegebenenfalls mit einem Gewichtsanteil, bezogen auf die Gesamtformulierung, von 0,1 bis 10 % enthalten ist.

Weiterer Gegenstand der Erfindung ist auch ein Verfahren zur Herstellung der Pulverlackzusammensetzungen.

Gegenstand der Erfmdung ist auch die Verwendung der erfindungsgemäßen Pulverlackzusammensetzungen zur Herstellung von Pulverlackbeschichtungen auf Metall-, Kunststoff-, Glas-, Holz-, oder Ledersubstraten oder sonstigen hitzeresistenten Untergründen.

Ebenfalls Gegenstand der Erfindung sind Metallbeschichtungszusammensetzungen, insbesondere für Automobilkarossen, Motor- und Fahrräder, Gebäudeteile und Haushaltsgeräte, Holzbeschichtungszusammensetzungen, Glasbeschichtungszusammen-setzungen, Lederbeschichtungszusammensetzungen und Kunststoffbeschichtungs-zusammensetzungen, im Wesentlichen enthaltend eine Polyurethan-Pulverlackzusammensetzung aus
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6 - 18 Gew.-%,
B) mindestens ein hydroxylgruppenhaltiges Polymer mit einem Schmelzpunkt von 40 bis 130 °C und einer OH-Zahl zwischen 20 und 200 mg KOH / Gramm,
C) mindestens einen Katalysator der Formel M (OR¹)ₙ (OR²)ₘ (OR³)ₒ (OR⁴)ₚ (OR⁵)_{q} (OR⁶)ᵣ , wobei M ein Metall in beliebiger positiver Oxidationsstufe und identisch mit der Summe n+m+o+p+q+r ist, m, o, p, q, r ganze Zahlen von 0-6 darstellen und für die Summe n+m+o+p+q+r = 1 - 6 gilt, die Reste R¹ - R⁶ gleichzeitig oder unabhängig voneinander Wasserstoff oder Alkyl-, Aryl-, Aralkyl-, Heteroaryl-, Alkoxyalkylreste, mit 1-8 Kohlenstoffatomen bedeuten und die Reste jeweils linear oder verzweigt, unverbrückt oder mit anderen Resten verbrückt, unter Ausbildung von Cyclen, Bicyclen oder Tricyclen und die Verbrückungsatome neben Kohlenstoff auch Heteroatome sein können und zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen können,
so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt.

Uretdiongruppen enthaltende Polyisocyanate sind wohlbekannt und werden beispielsweise in US 4,476,054, US 4,912,210, US 4,929,724 sowie EP 417 603 beschrieben. Ein umfassender Überblick über industriell relevante Verfahren zur Dimerisierung von Isocyanaten zu Uretdionen liefert das J. Prakt. Chem. 336 (1994) 185-200. Im allgemeinen erfolgt die Umsetzung von Isocyanaten zu Uretdionen in Gegenwart löslicher Dimerisierungs-katalysatoren wie z. B. Dialkylaminopyridinen, Trialkylphosphinen, Phosphorigsäure-triamiden oder Imdidazolen. Die Reaktion - optional in Lösemitteln, bevorzugt aber in Abwesenheit von Lösemitteln durchgeführt - wird bei Erreichen eines gewünschten Umsatzes durch Zusatz von Katalysatorgiften abgestoppt. Überschüssiges monomeres Isocyanat wird im Anschluss durch Kurzwegverdampfung abgetrennt. Ist der Katalysator flüchtig genug, kann das Reaktionsgemisch im Zuge der Monomerabtrennung vom Katalysator befreit werden. Auf den Zusatz von Katalysatorgiften kann in diesem Fall verzichtet werden. Grundsätzlich ist zur Herstellung von Uretdiongruppen enthaltenden Polyisocyanaten eine breite Palette von Isocyanaten geeignet. Erfmdungsgemäß werden Isophorondiisocyanat (IPDI), Hexamethylendiisocyanat (HDI), 2-Methylpentandiisocyanat (MPDI), 2,2,4-Trimethyl-hexamethylendiisocyanat/2,4,4- Trimethyl-hexamethylendiisocyanat (TMDI), Norbomandiisocyanat (NBDI), Methylendiphenyldiisocyanat (MDI) und Tetramethylxylylendiisocyanat (TMXDI) bevorzugt verwendet. Ganz besonders bevorzugt werden IPDI und HDI.

Die Umsetzung dieser uretdiongruppentragenden Polyisocyanate zu Uretdiongruppen aufweisenden Pulverlackhärtern A) beinhaltet die Reaktion der freien NCO-Gruppen mit hydroxylgruppenhaltigen Monomeren oder Polymeren, wie z. B. Polyestern, Polythioethern, Polyethern, Polycaprolactamen, Polyepoxiden, Polyesteramiden, Polyurethanen oder niedermolekularen Di-, Tri- und/oder Tetraalkoholen als Kettenverlängerer und gegebenenfalls Monoaminen und/oder Monoalkoholen als Kettenabbrecher und wurde schon häufig beschrieben (EP 669 353, EP 669 354, DE 30 30 572, EP 639 598 oder EP 803 524). Bevorzugte Uretdiongruppen aufweisende Pulverlackhärter A) haben einen freien NCO-Gehalt von weniger als 5 Gew.-% und einen Gehalt an Uretdiongruppen von 6 bis 18 Gew.-% (berechnet als C₂N₂O₂, Molekulargewicht 84). Bevorzugt werden Polyester und monomere Dialkohole. Außer den Uretdiongruppen können die Pulverlackhärter auch Isocyanurat-, Biuret-, Allophanat-, Urethan- und/oder Harnstoff-Strukturen aufweisen.

Bei den hydroxylgruppenhaltigen Polymeren B) werden bevorzugt Polyester, Polyether, Polyacrylate, Polyurethane und/oder Polycarbonate mit einer OH-Zahl von 20 - 200 (in mg KOH/Gramm) eingesetzt. Besonders bevorzugt werden Polyester mit einer OH-Zahl von 30 - 150, einem mittleren Molekulargewicht von 500 - 6000 g/mol und einem Schmelzpunkt zwischen 40 und 130 °C verwendet. Solche Bindemittel sind beispielsweise in EP 669 354 und EP 254 152 beschrieben worden. Selbstverständlich können auch Mischungen solcher Polymere eingesetzt werden. Die Menge an den hydroxylgruppenhaltigen Polymeren B) wird so gewählt, dass auf jede Hydroxylgruppe der Komponente B) 0,3 bis 1 Uretdiongruppe der Komponente A) entfällt.

Gegenstand der Erfmdung ist auch die Verwendung mindestens eines Katalysators der Formel M (OR¹)ₙ (OR²)ₘ (OR³)ₒ (OR⁴)ₚ (OR⁵)_{q} (OR⁶)ᵣ , wobei M ein Metall in beliebiger positiver Oxidationsstufe und identisch mit der Summe n+m+o+p+q+r ist, m, o, p, q, r ganze Zahlen von 0-6 darstellen und für die Summe n+m+o+p+q+r = 1 - 6 gilt, die Reste R¹ - R⁶ gleichzeitig oder unabhängig voneinander Wasserstoff oder Alkyl-, Aryl-, Aralkyl-, Heteroaryl-, Alkoxyalkylreste, mit 1-8 Kohlenstoffatomen bedeuten und die Reste jeweils linear oder verzweigt, unverbrückt oder mit anderen Resten verbrückt, unter Ausbildung von Cyclen, Bicyclen oder Tricyclen und die Verbrückungsatome neben Kohlenstoff auch Heteroatome sein können und zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen können, in Polyurethan-Pulverlackzusammensetzungen sowie die Katalysatoren selbst.

Die erfindungswesentlichen Katalysatoren C) genügen der Formel M (OR¹)ₙ (OR²)ₘ (OR³)ₒ (OR⁴)ₚ (OR⁵)_{q} (OR⁶)ᵣ , wobei M ein Metall in beliebiger positiver Oxidationsstufe und identisch mit der Summe n+m+o+p+q+r ist, m, o, p, q, r ganze Zahlen von 0-6 darstellen und für die Summe n+m+o+p+q+r = 1 - 6 gilt, die Reste R¹ - R⁶ gleichzeitig oder unabhängig voneinander Wasserstoff oder Alkyl-, Aryl-, Aralkyl-, Heteroaryl-, Alkoxyalkylreste, mit 1-8 Kohlenstoffatomen bedeuten und die Reste jeweils linear oder verzweigt, unverbrückt oder mit anderen Resten verbrückt, unter Ausbildung von Cyclen, Bicyclen oder Tricyclen und die Verbrückungsatome neben Kohlenstoff auch Heteroatome sein können und zusätzlich noch eine oder mehrere Alkohol-, Amino-, Ester-, Keto-, Thio-, Urethan-, Harnstoff , Allophanatgruppen, Doppelbindungen, Dreifachbindungen oder Halogenatome aufweisen können. Beispiele für solche Katalysatore sind Lithiumhydroxid, Natriumhydroxid, Kaliumhydroxid, Rubidiumhydroxid, Cäsiumhydroxid, Berilliumiumhydroxid, Magnesiumhydroxid, Calziumhydroxid, Strontiumhydroxid, Bariumhydroxid, Aluminiumhydroxid, Zinkhydroxid, Lithiummethanolat, Natriummethanolat, Kaliummethanolat, Magnesiumethanolat, Calziumethanolat, Bariumethanolat, Lithiumethanolat, Natriumethanolat, Kaliummethanolat, Magnesiumethanolat, Calziumethanolat, Bariumethanolat, Lithiumpropylalkoholat, Natriumpropylalkoholat, Kaliumpropylalkoholat, Magnesiumpropylalkoholat, Calziumpropylalkoholat, Bariumpropylalkoholat, Lithiumisopropylalkoholat, Natriumisopropylalkoholat, Kaliumisopropylalkoholat, Magnesiumisopropylalkoholat, Calziumisopropylalkoholat, Bariumisopropylalkoholat, Lithium-1-butylalkoholat, Natrium-1-butylalkoholat, Kalium-1-butylalkoholat, Magnesium-1-butylalkoholat, Calzium-1-butylalkoholat, Barium-1-butylalkoholat, Lithium-2-butylalkoholat, Natrium-2-butylalkoholat, Kalium-2-butylalkoholat, Magnesium-2-butylalkoholat, Calzium-2-butylalkoholat, Barium-2-butylalkoholat, Lithiumisobutylalkoholat, Natriumisobutylalkoholat, Kaliumisobutylalkoholat, Magnesiumisobutylalkoholat, Calziumisobutylalkoholat, Bariumisobutylalkoholat, Lithium-tert.butylalkoholat, Natrium-tert.-butylalkoholat, Kalium-tert.-butylalkoholat, Magnesium-tert.butylalkoholat, Calzium-tert.-butylalkoholat, Barium-tert.-butylalkoholat, Lithiumphenolat, Natriumphenolat, Kaliumphenolat, Magnesiumphenolat, Calziumphenolat und Bariumphenolat. Selbstverständlich können auch Mischungen solcher Katalysatoren verwendet werden. Sie sind in einer Menge von 0,001 - 3 Gew.-%, bevorzugt 0,01 - 3 Gew.-%, bezogen auf die Komponenten A) und B) in der Pulverlackzusammensetzung enthalten. Die Katalysatoren können Kristallwasser enthalten, wobei dieses bei der Berechnung der eingesetzten Katalysatorenmenge nicht berücksichtigt wird, d. h. die Wassermenge wird herausgerechnet. Besonders bevorzugt werden Bariumhydroxid und Lithiumisopropylalkoholat eingesetzt.

Eine erfindungsgemäße Variante schließt die polymere Anbindung solcher Katalysatoren C) an Pulverlackhärter A) oder hydroxylgruppenhaltige Polymere B) mit ein. So können z. B. freie Alkohol-, Thio- oder Aminogruppen der Ammoniumsalze mit Säure-, Isocyanat-, oder Glycidylgruppen der Pulverlackhärter A) oder hydroxylgruppenhaltige Polymere B) umgesetzt werden, um die Katalysatoren C) in den polymeren Verbund zu integrieren.

Beachtet werden muss in diesem Zusammenhang, dass die Aktivität dieser Katalysatoren in Anwesenheit von Säuren deutlich abnimmt. Zu den herkömmlichen Reaktionspartnern der uretdionhaltiger Pulverlackhärter gehören hydroxylgruppenhaltige Polyester. Aufgrund der Herstellungsweise von Polyestern tragen diese mitunter in geringem Umfang noch Säuregruppen. Der Gehalt der Polyester an Säuregruppen sollte unter 20 mg KOH/g betragen, da sonst die Katalysatoren zu sehr inhibiert werden. In Gegenwart von solchen Säuregruppen tragenden Polyestern bietet es sich daher an, die erwähnten Katalysatoren entweder im Überschuss bezogen auf die Säuregruppen zu verwenden, oder aber reaktive Verbindungen zuzusetzen, die in der Lage sind, Säuregruppen abzufangen. Sowohl monofunktionelle als auch mehrfachfunktionelle Verbindungen können hierzu eingesetzt werden. Die möglicherweise vemetzende Wirkung der mehrfach funktionellen Verbindungen ist aufgrund der viskositätserhöhenden Wirkung zwar unerwünscht, stört aber in der Regel wegen der geringen Konzentration nicht.

Reaktive säureabfangende Verbindungen D) sind in der Lackchemie allgemein bekannt. So setzen sich beispielsweise Epoxyverbindungen, Carbodiimide, Hydroxyalkylamide oder aber auch 2-Oxazoline mit Säuregruppen bei erhöhten Temperaturen um. In Frage kommen dabei z. B. Versaticsäureglycidylester, Ethylhexylglycidylether, Butylglycidylether, Polypox R 16 (Pentaerythrittetraglycidylether, UPPC AG), Triglycidyletherisocyanurat (TGIC), EPIKOTE® 828 (Diglycidylether auf Basis Bisphenol A, Schell), aber auch Vestagon EP HA 320, (Hydroxyalkylamid, Degussa AG), Phenylenbisoxazolin, 2-Methyl-2-oxazolin, 2-Hydroxyethyl-2-oxazolin, 2-Hydroxypropyl-2-oxazolin und 5-Hydroxypentyl-2-oxazolin. Selbstverständlich kommen auch Mischungen solcher Substanzen in Frage. Diese reaktive Verbindung D) wird lediglich bei Anwesenheit von Säurengruppen in der Pulverlackzusammensetzung eingesetzt. Sind solche Säuregruppen in der Pulverlack-zusammensetzung enthalten, wird die reaktive Komponente D) in einem Gewichtsanteil von 0,1 bis 10 % bezogen auf die Gesamtformulierung zugesetzt, bevorzugt von 0,5 bis 3 %. Zusätzlich können Katalysatoren, die diese Reaktion zwischen Säuregruppen und Säurefängern beschleunigen, wie z. B. Benzyltrimethylammoniumchlorid, eingesetzt werden.

Für die Pulverlackherstellung können die in der Pulverlacktechnologie üblichen Zusatzstoffe E) wie Verlaufsmittel, z. B. Polysilicone oder Acrylate, Lichtschutzmittel z. B. sterisch gehinderte Amine, oder andere Hilfsmittel, wie sie z. B. in EP 669 353 beschrieben wurden, in einer Gesamtmenge von 0,05 bis 5 Gew.-% zugesetzt werden. Füllstoffe und Pigmente wie z. B. Titandioxid können in einer Menge bis zu 50 Gew.-% der Gesamtzusammensetzung zugesetzt werden.

Optional können zusätzliche Katalysatoren, wie sie in der Polyurethanchemie bereits bekannt sind, enthalten sein. Es handelt sich hierbei hauptsächlich um metallorganischen Katalysatoren, wie z. B. Dibutylzinndilaurat, oder aber tertiäre Amine, wie z. B. 1,4-Diazabicylco[2,2,2,]octan, in Mengen von 0,001-1 Gew.-%.

Herkömmliche uretdionhaltige Pulverlackzusammensetzungen lassen sich unter normalen Bedingungen (DBTL-Katalyse) erst ab 180 °C aushärten. Mit Hilfe der erfindungsgemäßen Niedrigtemperatur härtenden Pulverlackzusammensetzungen kann bei maximal 160 °C Aushärtungstemperatur (auch geringere Aushärtungstemperaturen sind durchaus möglich) nicht nur Energie und (Aushärtungs-)Zeit gespart werden, sondern es lassen sich auch viele temperatursensible Substrate beschichten, die bei 180 °C unerwünschte Vergilbungs-, Zersetzungs- und/oder Versprödungserscheinungen zeigen würden. Neben Metall, Glas, Holz, Leder, Kunststoffen und MDF-Platten sind auch bestimmte Aluminiumuntergründe prädestiniert. Bei letzteren fährt eine zu hohe Temperaturbelastung mitunter zu einer unerwünschten Änderung der Kristallstruktur.

Die Homogenisierung aller Bestandteile zur Herstellung einer Pulverlackzusammensetzung kann in geeigneten Aggregaten, wie z. B. beheizbaren Knetern, vorzugsweise jedoch durch Extrudieren, erfolgen, wobei Temperaturobergrenzen von 120 bis 130 °C nicht überschritten werden sollten. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, wie z. B. durch elektrostatisches Pulversprühen, Wirbelsintern, oder elektrostatisches Wirbelsintern erfolgen. Nach dem Pulverauftrag werden die beschichteten Werkstücke zur Aushärtung 4 bis 60 Minuten auf eine Temperatur von 120 bis 220 °C, vorzugsweise 6 bis 30 Minuten bei 120 bis 180 °C erhitzt.

Nachfolgend wird der Gegenstand der Erfindung anhand von Beispielen näher erläutert.

### Beispiele:

| **Einsatzstoffe** | **Produktbeschreibung, Hersteller** |
|---|---|
| VESTAGON BF 1320 | Pulverlackhärter, Degussa AG, Coatings & Colorants, Uretdion-Gehalt: 13,8 %, Schmp.: 99-112 °C, T_{G}: 87 °C |
| CRYLCOAT 240 | OH-Polyester, OH-Zahl: 24,5; SZ: 3,3; UCB |
| ARALDIT PT 810 | Triglycidyletherisocyanurat (TGIC), Vantico |
| KRONOS 2160 | Titandioxid, Kronos |
| RESIFLOW PV 88 | Verlaufsmittel, Worlee |
| BTAC | Benzyltrimethylammoniumchlorid, Aldrich |
| BH | Bariumhydroxid-8-Hydrat WG: 46, Aldrich |
| LiPA | Lithiumisopropylalkoholat, Aldrich |
| DBTL | Dibutylzinndilaurat, Crompton Vinyl Additives GmbH |

OH-Zahl: Verbrauch mg KOH/g Polymer; SZ: Säurezahl, Verbrauch mg KOH/g Polymer Schmp.: Schmelzpunkt; T_{G}: Glasübergangspunkt; WG: Wassergehalt in Gew.-% Allgemeine Herstellungsvorschrift für die Pulverlacke:
Die zerkleinerten Einsatzstoffe - Pulverlackhärter, hydroxyfunktionelle Polymere, Katalysatoren, Säurefänger, Verlaufsmittel - werden in einem Kollergang innig vermischt und anschließend im Extruder bis maximal 130 °C homogenisiert. Nach dem Erkalten wird das Extrudat gebrochen und mit einer Stiftsmühle auf eine Korngröße < 100 µm gemahlen. Das so hergestellte Pulver wird mit einer elektrostatischen Pulverspritzanlage bei 60 KV auf entfettete Eisenbleche appliziert und in einem Umlufttrockenschrank eingebrannt.

| Pulverlack-Zusammensetzungen (Angaben in Gew.-%, außer bei OH/UD): | | | | | | | |
|---|---|---|---|---|---|---|---|
| **Beispiele** | **VESTAGON BF 1320** | **CRYLCOAT 240** | **BH** | **LiPA** | **BTAC** | **DBTL** | **OH/UD** |
| 1 | 8,14 | 48,92 | 0,44 | | | | 1,00:0,50 |
| 2 | 11,37 | 45,52 | 0,61 | | | | 1,00:0,75 |
| 3 | 14,18 | 42,56 | 0,76 | | | | 1,00:1,00 |
| 4 | 10,43 | 46,11 | | 0,46 | 0,50 | | 1,00:0,75 |
| 5 | 13,07 | 43,35 | | 0,58 | 0,50 | | 1,00:1,00 |
| V* | 10,43 | 46,11 | | | 0,50 | 0,46 | 1,00:0,75 |
| V2* | 13,07 | 43,35 | | | 0,50 | 0,58 | 1,00:1,00 |

| | | | | | | | |
|---|---|---|---|---|---|---|---|
| * nicht erfindungsgemäße Vergleichsbeispiele | | | | | | | |

OH/UD: Verhältnis OH-Gruppen zu Uretdiongruppen (Mol:Mol)
Zusätzlich wurden in jeder der Formulierungen 40,0 Gew.-% KRONOS 2160, 1,0 Gew.-% RESIFLOW PV 88 und 1,5 Gew.-% ARALDIT PT 810 eingesetzt.

Ergebnisse der Aushärtung nach 30 min bei 160 °C:

| **Beispiele** | **Erichsentiefung [mm]** | **Kugelschlag direkt [inch • lb]** | **Bemerkung** |
|---|---|---|---|
| 1 | > 10,0 | 80 | ausgehärtet |
| 2 | > 10,0 | 110 | ausgehärtet |
| 3 | > 10,0 | >160 | ausgehärtet |
| 4 | 9,5 | 100 | ausgehärtet |
| 5 | > 10,0 | 100 | ausgehärtet |
| V1* * | 0,5 | 30 | nicht ausgehärtet |
| V2* | 0,5 | 20 | nicht ausgehärtet |
| Erichsentiefung nach DIN 53 156 Kugelschlag nach ASTM D 2794-93 | | | |

## Patentansprüche

1. Hochreaktive Polyurethan-Pulverlackzusammensetzung im Wesentlichen enthaltend
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6 - 18 Gew.-%,
B) mindestens ein hydroxylgruppenhaltiges Polymer mit einem Schmelzpunkt von 40 bis 130 °C und einer OH-Zahl zwischen 20 und 200 mg KOH / Gramm,
C) mindestens einen Katalysator der Formel M (OR¹)ₙ (OR²)ₘ (OR³)ₒ (OR⁴)ₚ (OR⁵)_{q} (OR⁶)ᵣ , wobei M ein Metall in beliebiger positiver Oxidationsstufe und identisch mit der Summe n+m+o+p+q+r ist, m, o, p, q, r ganze Zahlen von 0-6 darstellen und für die Summe n+m+o+p+q+r = 1 - 6 gilt, die Reste R¹ - R⁶ gleichzeitig oder unabhängig voneinander Wasserstoff oder Alkyl-, Aryl-, Aralkyl-, Heteroaryl-, Alkoxyalkylreste, mit 1-8 Kohlenstoffatomen bedeuten und die Reste jeweils linear oder verzweigt, unverbrückt oder mit anderen Resten verbrückt, unter Ausbildung von Cyclen, Bicyclen oder Tricyclen und die Verbrückungsatome neben Kohlenstoff auch Heteroatome sein können und zusätzlich noch eine oder mehrere Alkohol-, Amino-, Ester-, Keto-, Thio-, Urethan-, Harnstoff , Allophanatgruppen, Doppelbindungen, Dreifachbindungen oder Halogenatome aufweisen können,
so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt.

2. Polyurethan-Pulverlackzusammensetzung gemäß Anspruch 1,
**dadurch gekennzeichnet**,
D) dass mindestens eine gegenüber Säuregruppen reaktive Verbindung mit einem Gewichtsanteil, bezogen auf die Gesamtformulierung, von 0,1 bis 10 % enthalten ist.

3. Polyurethan-Pulverlackzusammensetzung nach Anspruch 1 oder 2,
**dadurch gekennzeichnet,**
**dass** Hilfs- und Zusatzstoffe enthalten sind.

4. Polyurethan-Pulverlackzusammensetzungen nach mindestens einem der Ansprüche 1 bis 3,
**dadurch gekennzeichnet,**
**dass** uretdionhaltige Pulverlackhärter A) auf Basis von Isophorondiisocyanat (IPDI), Hexamethylendiisocyanat (HDI), 2-Methylpentadiisocyanat (MPDI), 2,2,4-Trimethylhexamethylendiisocyanat/2,4,4-Trimethyl-hexamethylendiisocyanat (TMDI), Norbomandiisocyanat (NBDI), Methylendiphenyldiisocyanat (MDI) und Tetramethylxylylendiisocyanat (TMXDI), allein oder in Mischungen, enthalten sind.

5. Polyurethan-Pulverlackzusammensetzungen nach Anspruch 4,
**dadurch gekennzeichnet,**
**dass** uretdionhaltige Pulverlackhärter auf Basis von IPDI und/oder HDI enthalten sind.

6. Polyurethan-Pulverlackzusammensetzungen nach mindestens einem der Ansprüche 1 bis 5,
**dadurch gekennzeichnet,**
**dass** uretdionhaltige Pulverlackverhärter A) auf Basis hydroxylgruppenhaltiger Polyester, Polythioether, Polyether, Polycaprolactame, Polyepoxide, Polyesteramide, Polyurethane, niedermolekulare Di-, Tri- und/oder Tetraalkohole, Monoamine und/oder Monoalkohole, allein oder in Mischungen, enthalten sind.

7. Polyurethan-Pulverlackzusammensetzungen nach Anspruch 6,
**dadurch gekennzeichnet,**
**dass** Polyester und/oder monomere Dialkohole enthalten sind.

8. Polyurethan-Pulverlackzusammensetzungen nach mindestens einem der Ansprüche 1 bis 7,
**dadurch gekennzeichnet,**
**dass** als hydroxylgruppenhaltige Polymere B) Polyester, Polyether, Polyacrylate, Polyurethane und Polycarbonate, allein oder in Mischungen, enthalten sind.

9. Polyurethan-Pulverlackzusammensetzungen nach Anspruch 8,
**dadurch gekennzeichnet,**
**dass** Polyester mit einer OH-Zahl von 30 bis 150 mg KOH/g, einem mittleren Molekulargewicht von 500 bis 6000 g/mol und einem Schmelzpunkt zwischen 40 und 130 °C, enthalten sind.

10. Polyurethan-Pulverlackzusammensetzungen nach mindestens einem der Ansprüche 1 bis 9,
**dadurch gekennzeichnet,**
**dass** als Katalysatoren C) Metallhydroxide oder Metallalkoholate enthalten sind.

11. Polyurethan-Pulverlackzusammensetzungen nach mindestens einem der Ansprüche 1 bis 10,
**dadurch gekennzeichnet,**
**dass** Katalysatoren C), ausgewählt aus Lithiumhydroxid, Natriumhydroxid, Kaliumhydroxid, Rubidiumhydroxid, Cäsiumhydroxid, Berilliumiumhydroxid, Magnesiumhydroxid, Calziumhydroxid, Strontiumhydroxid, Bariumhydroxid, Aluminiumhydroxid, Zinkhydroxid, Lithiummethanolat, Natriummethanolat, Kaliummethanolat, Magnesiumethanolat, Calziumethanolat, Bariumethanolat, Lithiumethanolat, Natriumethanolat, Kaliummethanolat, Magnesiumethanolat, Calziumethanolat, Bariumethanolat, Lithiumpropylalkoholat, Natriumpropylalkoholat, Kaliumpropylalkoholat, Magnesiumpropylalkoholat, Calziumpropylalkoholat, Bariumpropylalkoholat, Lithiumisopropylalkoholat, Natriumisopropylalkoholat, Kaliumisopropylalkoholat, Magnesiumisopropylalkoholat, Calziumisopropylalkoholat, Bariumisopropylalkoholat, Lithium-1-butylalkoholat, Natrium-1-butylalkoholat, Kalium-1-butylalkoholat, Magnesium-1-butylalkoholat, Calzium-1-butylalkoholat, Barium-1-butylalkoholat, Lithium-2-butylalkoholat, Natrium-2-butylalkoholat, Kalium-2-butylalkoholat, Magnesium-2-butylalkoholat, Calzium-2-butylalkoholat, Barium-2-butylalkoholat, Lithiumisobutylalkoholat, Natriumisobutylalkoholat, Kaliumisobutylalkoholat, Magnesiumisobutylalkoholat, Calziumisobutylalkoholat, Bariumisobutylalkoholat, Lithium-tert.-butylalkoholat, Natrium-tert.-butylalkoholat, Kalium-tert.-butylalkoholat, Magnesium-tert.-butylalkoholat, Calzium-tert.-butylalkoholat, Barium-tert.-butylalkoholat, Lithiumphenolat, Natriumphenolat, Kaliumphenolat, Magnesiumphenolat, Calziumphenolat und Bariumphenolat, eingesetzt werden., allein oder in Mischungen, enthalten sind.

12. Polyurethan-Pulverlackzusammensetzungen nach mindestens einem der Ansprüche 1 bis 11,
**dadurch gekennzeichnet,**
**dass** als Komponente D) Epoxyverbindungen, Carbodiimide, Hydroxyalkylamide und/oder 2-Oxazoline enthalten sind.

13. Polyurethan-Pulverlackzusammensetzungen nach Anspruch 12,
**dadurch gekennzeichnet,**
**dass** Triglycidyletherisocyanurat, EPIKOTE® 828, Versaticsäureglycidylester, Vestagon EP HA 320, Phenylenbisoxazolin, 2-Methyl-2-oxazolin, 2-Hydroxyethyl-2-oxazolin, 2-Hydroxypropyl-2-oxazolin und/oder 5-Hydroxypentyl-2-oxazolin, allein oder in Mischungen, enthalten sind.

14. Polyurethan-Pulverlackzusammensetzungen nach mindestens einem der Ansprüche 1 bis 13,
**dadurch gekennzeichnet,**
**dass** als Hilfs- und Zusatzstoffe E) Verlaufsmittel, Lichtschutzmittel, Füllstoff, zusätzliche Katalysatoren und/oder Pigmente enthalten sind.

15. Verfahren zur Herstellung von hochreaktiven Polyurethan-Pulverlackzusammensetzungen, im Wesentlichen enthaltend
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6 - 18 Gew.-%,
B) mindestens ein hydroxylgruppenhaltiges Polymer mit einem Schmelzpunkt von 40 bis 130 °C und einer OH-Zahl zwischen 20 und 200 mg KOH / Gramm,
C) mindestens einen Katalysator der Formel M (OR¹)ₙ (OR²)ₘ (OR³)ₒ (OR⁴)ₚ (OR⁵)_{q} (OR⁶)ᵣ , wobei M ein Metall in beliebiger positiver Oxidationsstufe und identisch mit der Summe n+m+o+p+q+r ist, m, o, p, q, r ganze Zahlen von 0-6 darstellen und für die Summe n+m+o+p+q+r = 1 - 6 gilt, die Reste R¹ - R⁶ gleichzeitig oder unabhängig voneinander Wasserstoff oder Alkyl-, Aryl-, Aralkyl-, Heteroaryl-, Alkoxyalkylreste, mit 1 - 8 Kohlenstoffatomen bedeuten und die Reste jeweils linear oder verzweigt, unverbrückt oder mit anderen Resten verbrückt, unter Ausbildung von Cyclen, Bicyclen oder Tricyclen und die Verbrückungsatome neben Kohlenstoff auch Heteroatome sein können und zusätzlich noch eine oder mehrere Alkohol-, Amino-, Ester-, Keto-, Thio-, Urethan-, Harnstoff , Allophanatgruppen, Doppelbindungen, Dreifachbindungen oder Halogenatome aufweisen können,
so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt, in beheizbaren Aggregaten bei einer Temperaturobergrenze von 120 bis 130 °C.

16. Verwendung mindestens eines Katalysators der Formel M (OR¹)ₙ (OR²)ₘ (OR³)ₒ (OR⁴)ₚ (OR⁵)_{q} (OR⁶)ᵣ , wobei M ein Metall in beliebiger positiver Oxidationsstufe und identisch mit der Summe n+m+o+p+q+r ist, m, o, p, q, r ganze Zahlen von 0-6 darstellen und für die Summe n+m+o+p+q+r = 1 - 6 gilt, die Reste R¹ - R⁶ gleichzeitig oder unabhängig voneinander Wasserstoff oder Alkyl-, Aryl-, Aralkyl-, Heteroaryl-, Alkoxyalkylreste, mit 1 - 8 Kohlenstoffatomen bedeuten und die Reste jeweils linear oder verzweigt, unverbrückt oder mit anderen Resten verbrückt, unter Ausbildung von Cyclen, Bicyclen oder Tricyclen und die Verbrückungsatome neben Kohlenstoff auch Heteroatome sein können und zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen können, in Polyurethan-Pulverlackzusammensetzungen.

17. Verwendung nach Anspruch 16,
**dadurch gekennzeichnet,**
**dass** Verbindungen, ausgewählt aus Lithiumhydroxid, Natriumhydroxid, Kaliumhydroxid, Rubidiumhydroxid, Cäsiumhydroxid, Berilliumiumhydroxid, Magnesiumhydroxid, Calziumhydroxid, Strontiumhydroxid, Bariumhydroxid, Aluminiumhydroxid, Zinkhydroxid, Lithiummethanolat, Natriummethanolat, Kaliummethanolat, Magnesiumethanolat, Calziumethanolat, Bariumethanolat, Lithiumethanolat, Natriumethanolat, Kaliummethanolat, Magnesiumethanolat, Calziumethanolat, Bariumethanolat, Lithiumpropylalkoholat, Natriumpropylalkoholat, Kaliumpropylalkoholat, Magnesiumpropylalkoholat, Calziumpropylalkoholat, Bariumpropylalkoholat, Lithiumisopropylalkoholat, Natriumisopropylalkoholat, Kaliumisopropylalkoholat, Magnesiumisopropylalkoholat, Calziumisopropylalkoholat, Bariumisopropylalkoholat, Lithium-1-butylalkoholat, Natrium-1-butylalkoholat, Kalium-1-butylalkoholat, Magnesium-1-butylalkoholat, Calzium-1-butylalkoholat, Barium-1 -butylalkoholat, Lithium-2-butylalkoholat, Natrium-2-butylalkoholat, Kalium-2-butylalkoholat, Magnesium-2-butylalkoholat, Calzium-2-butylalkoholat, Barium-2-butylalkoholat, Lithiumisobutylalkoholat, Natriumisobutylalkoholat, Kaliumisobutylalkoholat, Magnesiumisobutylalkoholat, Calziumisobutylalkoholat, Bariumisobutylalkoholat, Lithiumtert.-butylalkoholat, Natrium-tert.-butylalkoholat, Kalium-tert.-butylalkoholat, Magnesiumtert.-butylalkoholat, Calzium-tert.-butylalkoholat, Barium-tert.-butylalkoholat, Lithiumphenolat, Natriumphenolat, Kaliumphenolat, Magnesiumphenolat, Calziumphenolat und Bariumphenolat, eingesetzt werden.

18. Katalysator zur Beschleunigung der Aushärtung von Pulverlackzusammensetzungen, im Wesentlichen enthaltend einen uretdionhaltigen Pulverlackhärter und ein hydroxylgruppenhaltiges Polymer, der Formel M (OR¹)ₙ (OR²)ₘ (OR³)ₒ (OR⁴)ₚ (OR⁵)_{q} (OR⁶)ᵣ , wobei M ein Metall in beliebiger positiver Oxidationsstufe und identisch mit der Summe n+m+o+p+q+r ist, m, o, p, q, r ganze Zahlen von 0-6 darstellen und für die Summe n+m+o+p+q+r = 1 - 6 gilt, die Reste R¹ - R⁶ gleichzeitig oder unabhängig voneinander Wasserstoff oder Alkyl-, Aryl-, Aralkyl-, Heteroaryl-, Alkoxyalkylreste, mit 1 - 8 Kohlenstoffatomen bedeuten und die Reste jeweils linear oder verzweigt, unverbrückt oder mit anderen Resten verbrückt, unter Ausbildung von Cyclen, Bicyclen oder Tricyclen und die Verbrückungsatome neben Kohlenstoff auch Heteroatome sein können und zusätzlich noch eine oder mehrere Alkohol-, Amino-, Ester-, Keto-, Thio-, Urethan-, Harnstoff , Allophanatgruppen, Doppelbindungen, Dreifachbindungen oder Halogenatome aufweisen können.

19. Katalysator nach Anspruch 18, ausgewählt aus Metallhydroxiden und/oder Metallalkoholaten.

20. Katalysator nach Anspruch 18, ausgewählt aus Lithiumhydroxid, Natriumhydroxid, Kaliumhydroxid, Rubidiumhydroxid, Cäsiumhydroxid, Berilliumiumhydroxid, Magnesiumhydroxid, Calziumhydroxid, Strontiumhydroxid, Bariumhydroxid, Aluminiumhydroxid, Zinkhydroxid, Lithiummethanolat, Natriummethanolat, Kaliummethanolat, Magnesiumethanolat, Calziumethanolat, Bariumethanolat, Lithiumethanolat, Natriumethanolat, Kaliummethanolat, Magnesiumethanolat, Calziumethanolat, Bariumethanolat, Lithiumpropylalkoholat, Natriumpropylalkoholat, Kaliumpropylalkoholat, Magnesiumpropylalkoholat, Calziumpropylalkoholat, Bariumpropylalkoholat, Lithiumisopropylalkoholat, Natriumisopropylalkoholat, Kaliumisopropylalkoholat, Magnesiumisopropylalkoholat, Calziumisopropylalkoholat, Bariumisopropylalkoholat, Lithium-1-butylalkoholat, Natrium-1-butylalkoholat, Kalium-1-butylalkoholat, Magnesium-1-butylalkoholat, Calzium-1-butylalkoholat, Barium-1-butylalkoholat, Lithium-2-butylalkoholat, Natrium-2-butylalkoholat, Kalium-2-butylalkoholat, Magnesium-2-butylalkoholat, Calzium-2-butylalkoholat, Barium-2-butylalkoholat, Lithiumisobutylalkoholat, Natriumisobutylalkoholat, Kaliumisobutylalkoholat, Magnesiumisobutylalkoholat, Calziumisobutylalkoholat, Bariumisobutylalkoholat, Lithium-tert.-butylalkoholat, Natrium-tert.-butylalkoholat, Kalium-tert.-butylalkoholat, Magnesium-tert.-butylalkoholat, Calzium-tert.-butylalkoholat, Barium-tert.-butylalkoholat, Lithiumphenolat, Natriumphenolat, Kaliumphenolat, Magnesiumphenolat, Calziumphenolat und Bariumphenolat.

21. Verwendung von
A) mindestens einem uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6-18 Gew.-%,
B) mindestens einem hydroxylgruppenhaltigen Polymer mit einem Schmelzpunkt von 40 bis 130 °C und einer OH-Zahl zwischen 20 und 200 mg KOH / Gramm,
C) mindestens einen Katalysator der Formel M (OR¹)ₙ (OR²)ₘ (OR³)ₒ (OR⁴)ₚ (OR⁵)_{q} (OR⁶)ᵣ , wobei M ein Metall in beliebiger positiver Oxidationsstufe und identisch mit der Summe n+m+o+p+q+r ist, m, o, p, q, r ganze Zahlen von 0-6 darstellen und für die Summe n+m+o+p+q+r = 1 - 6 gilt, die Reste R¹ - R⁶ gleichzeitig oder unabhängig voneinander Wasserstoff oder Alkyl-, Aryl-, Aralkyl-, Heteroaryl-, Alkoxyalkylreste, mit 1 - 8 Kohlenstoffatomen bedeuten und die Reste jeweils linear oder verzweigt, unverbrückt oder mit anderen Resten verbrückt, unter Ausbildung von Cyclen, Bicyclen oder Tricyclen und die Verbrückungsatome neben Kohlenstoff auch Heteroatome sein können und zusätzlich noch eine oder mehrere Alkohol-, Amino-, Ester-, Keto-, Thio-, Urethan-, Harnstoff- , Allophanatgruppen, Doppelbindungen, Dreifachbindungen oder Halogenatome aufweisen können,
so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt, zur Herstellung von Pulverlackbeschichtungen.

22. Verwendung nach Anspruch 21,
**dadurch gekennzeichnet,**
**dass** Ausgangsverbindungen nach mindestens einem der Ansprüche 2 bis 14 enthalten sind.

23. Verwendung nach Anspruch 21 - 22 zur Herstellung von Pulverlackbeschichtungen auf Metall-, Kunststoff-, Holz-, Glas-, Leder- oder sonstigen hitzeresistenten Untergründen.

24. Metallbeschichtungszusammensetzungen, im Wesentlichen enthaltend eine Polyurethan-Pulverlackzusammensetzung aus
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6 - 18 Gew.-%,
B) mindestens ein hydroxylgruppenhaltiges Polymer mit einem Schmelzpunkt von 40 bis 130 °C und einer OH-Zahl zwischen 20 und 200 mg KOH / Gramm,
C mindestens einen Katalysator der Formel M (OR¹)ₙ (OR²)ₘ (OR³)ₒ (OR⁴)ₚ (OR⁵)_{q} (OR⁶)ᵣ , wobei M ein Metall in beliebiger positiver Oxidationsstufe und identisch mit der Summe n+m+o+p+q+r ist, m, o, p, q, r ganze Zahlen von 0-6 darstellen und für die Summe n+m+o+p+q+r = 1 - 6 gilt, die Reste R¹ - R⁶ gleichzeitig oder unabhängig voneinander Wasserstoff oder Alkyl-, Aryl-, Aralkyl-, Heteroaryl-, Alkoxyalkylreste, mit 1-8 Kohlenstoffatomen bedeuten und die Reste jeweils linear oder verzweigt, unverbrückt oder mit anderen Resten verbrückt, unter Ausbildung von Cyclen, Bicyclen oder Tricyclen und die Verbrückungsatome neben Kohlenstoff auch Heteroatome sein können und zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen können,
so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt.

25. Holzbeschichtungszusammensetzung, im Wesentlichen enthaltend eine Polyurethan-Pulverlackzusammensetzung aus
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6-18 Gew.-%,
B) mindestens ein hydroxylgruppenhaltiges Polymer mit einem Schmelzpunkt von 40 bis 130 °C und einer OH-Zahl zwischen 20 und 200 mg KOH / Gramm,
C) mindestens einen Katalysator der Formel M (OR¹)ₙ (OR²)ₘ (OR³)ₒ (OR⁴)ₚ (OR⁵)_{q} (OR⁶)ᵣ , wobei M ein Metall in beliebiger positiver Oxidationsstufe und identisch mit der Summe n+m+o+p+q+r ist, m, o, p, q, r ganze Zahlen von 0-6 darstellen und für die Summe n+m+o+p+q+r = 1 - 6 gilt, die Reste R¹ - R⁶ gleichzeitig oder unabhängig voneinander Wasserstoff oder Alkyl-, Aryl-, Aralkyl-, Heteroaryl-, Alkoxyalkylreste, mit 1-8 Kohlenstoffatomen bedeuten und die Reste jeweils linear oder verzweigt, unverbrückt oder mit anderen Resten verbrückt, unter Ausbildung von Cyclen, Bicyclen oder Tricyclen und die Verbrückungsatome neben Kohlenstoff auch Heteroatome sein können und zusätzlich noch eine oder mehrere Alkohol-, Amino-, Ester-, Keto-, Thio-, Urethan-, Harnstoff-, Allophanatgruppen, Doppelbindungen, Dreifachbindungen oder Halogenatome aufweisen können,
so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt.

26. Lederbeschichtungszusammensetzungen, im Wesentlichen enthaltend eine Polyurethan-Pulverlackzusammensetzung aus
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6-18 Gew.-%,
B) mindestens ein hydroxylgruppenhaltiges Polymer mit einem Schmelzpunkt von 40 bis 130 °C und einer OH-Zahl zwischen 20 und 200 mg KOH / Gramm,
C) mindestens einen Katalysator der Formel M (OR¹)ₙ (OR²)ₘ (OR³)ₒ (OR⁴)ₚ (OR⁵)_{q} (OR⁶)ᵣ , wobei M ein Metall in beliebiger positiver Oxidationsstufe und identisch mit der Summe n+m+o+p+q+r ist, m, o, p, q, r ganze Zahlen von 0-6 darstellen und für die Summe n+m+o+p+q+r = 1 - 6 gilt, die Reste R¹ - R⁶ gleichzeitig oder unabhängig voneinander Wasserstoff oder Alkyl-, Aryl-, Aralkyl-, Heteroaryl-, Alkoxyalkylreste, mit 1-8 Kohlenstoffatomen bedeuten und die Reste jeweils linear oder verzweigt, unverbrückt oder mit anderen Resten verbrückt, unter Ausbildung von Cyclen, Bicyclen oder Tricyclen und die Verbrückungsatome neben Kohlenstoff auch Heteroatome sein können und zusätzlich noch eine oder mehrere Alkohol-, Amino-, Ester-, Keto-, Thio-, Urethan-, Harnstoff , Allophanatgruppen, Doppelbindungen, Dreifachbindungen oder Halogenatome aufweisen können,
so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt.

27. Kunststoffbeschichtungszusammensetzungen, im Wesentlichen enthaltend eine Polyurethan-Pulverlackzusammensetzung aus
A) mindestens einen uretdionhaltigen Pulverlackhärter, basierend auf aliphatischen, (cyclo)aliphatischen oder cycloaliphatischen Polyisocyanaten und hydroxylgruppenhaltigen Verbindungen, mit einem Schmelzpunkt von 40 bis 130 °C, einem freien NCO-Gehalt von kleiner 5 Gew.-% und einem Uretdiongehalt von 6 - 18 Gew.-%,
B) mindestens ein hydroxylgruppenhaltiges Polymer mit einem Schmelzpunkt von 40 bis 130 °C und einer OH-Zahl zwischen 20 und 200 mg KOH / Gramm,
C) mindestens einen Katalysator der Formel M (OR¹)ₙ (OR²)ₘ (OR³)ₒ (OR⁴)ₚ (OR⁵)_{q} (OR⁶)ᵣ , wobei M ein Metall in beliebiger positiver Oxidationsstufe und identisch mit der Summe n+m+o+p+q+r ist, m, o, p, q, r ganze Zahlen von 0-6 darstellen und für die Summe n+m+o+p+q+r = 1 - 6 gilt, die Reste R¹ - R⁶ gleichzeitig oder unabhängig voneinander Wasserstoff oder Alkyl-, Aryl-, Aralkyl-, Heteroaryl-, Alkoxyalkylreste, mit 1-8 Kohlenstoffatomen bedeuten und die Reste jeweils linear oder verzweigt, unverbrückt oder mit anderen Resten verbrückt, unter Ausbildung von Cyclen, Bicyclen oder Tricyclen und die Verbrückungsatome neben Kohlenstoff auch Heteroatome sein können und zusätzlich noch eine oder mehrere Alkohol-, Amino-, Ester-, Keto-, Thio-, Urethan-, Harnstoff , Allophanatgruppen, Doppelbindungen, Dreifachbindungen oder Halogenatome aufweisen können,
so dass die beiden Komponenten A) und B) in dem Verhältnis vorliegen, dass auf jede Hydroxylgruppe der Komponente B) 0,3 bis 1 Uretdiongruppe der Komponente A) entfällt, und der Anteil des Katalysators unter C) 0,001 - 3 Gew.-% an der Gesamtmenge der Komponenten A) und B) beträgt.

28. Metallbeschichtung nach Anspruch 24 für Automobilkarossen, Motor- und Fahrräder, Gebäudeteile und Haushaltsgeräte.

29. Beschichtungszusammensetzungen nach einem der Ansprüche 24 bis 28,
**dadurch gekennzeichnet,**
**dass** mindestens eine gegenüber Säuregruppen reaktive Verbindung mit einem Gewichtsanteil, bezogen auf die Gesamtformulierung, von 0,1 bis 10 % enthalten ist.

30. Beschichtungszusammensetzungen nach einem der Ansprüche 24 bis 29,
**dadurch gekennzeichnet,**
**dass** Hilfs- und Zusatzstoffe E) enthalten sind.

31. Beschichtungszusammensetzungen nach einem der Ansprüche 24 bis 30,
**dadurch gekennzeichnet,**
**dass** diese Verbindungen nach mindestens einem der Ansprüche 2 bis 14 enthalten.
